# EUROPEAN PATENT SPECIFICATION

(11) **EP 1 613 981 B1**
(45) Date of publication and mention of the grant of the patent: **17.10.2007**
(21) Application number: 04758012.1
(22) Date of filing: 22.03.2004
(51) Int. Cl.: G01V 1/26, G01V 1/42, E21B 47/16

(54) **USE OF PATTERN RECOGNITION IN A MEASUREMENT OF FORMATION TRANSIT TIME FOR SEISMIC CHECKSHOTS**
VERWENDUNG DER MUSTERERKENNUNG BEI EINER MESSUNG DER FORMATIONSTRANSITZEIT FÜR SEISMISCHE CHECKSHOTS
UTILISATION DE LA RECONNAISSANCE DE FORMES DANS LA MESURE D'UN TEMPS DE PARCOURS DE FORMATION POUR TIRS DE CONTROLE SISMIQUES

(30) Priority: 20.03.2003 US 456151 P
(43) Date of publication of application: 11.01.2006
(73) Proprietor: BAKER HUGHES INCORPORATED, Houston, Texas 77027 (US)
(72) Inventor: GASTON, Graham, Hannover (DE); MATHISZIK, Holger, D-29339 Wathlingen (DE); REHBOCK, Hans, H., D-29342 Wienhausen (US)
(74) Representative: Fioravanti, Corrado
(86) International application number: PCT/US2004/008717
(87) International publication number: WO 2004/086093

(56) References cited:
- GB-A- 2 131 170
- US-A- 4 635 238
- US-A- 5 555 220
- US-B1- 6 400 646

## Description

### BACKGROUND OF THE INVENTION

### Field of the Invention

The present invention is related to the field of geophysical exploration and more specifically to a method of using a seismic surface source to send signals to a drill string in a wellbore to acquire seismic data while drilling.

### Description of the Related Art

In drilling a borehole to recover oil from the earth, it is often helpful to turn or steer the downhole drill bit toward or away from subterranean targets. To facilitate this geophysical steering, drillers need to know drill bit location on the seismic section. The location of targets ahead of the bit is also required, as well as some warning or indication of drilling hazards such as over-pressured formations or thin, shallow gas intervals. Surface seismic surveys generally include this information, but resolution and depth location is poor because surface seismic surveys are time based (rather than depth based) and the low frequencies generally available are not conducive for high resolution. For example, to determine the depth of a reflection, a speed of sound for the earth formation must be known. Consequently, these systems require depth calibration to accurately determine locations of target horizons or drilling hazards. Traditionally, this calibration has been provided by either offset well sonic data or wireline checkshot data in the current well. Offset data is often inadequate however due to horizontal variations in stratigraphy between wells.

During surface seismic surveys, a plurality of seismic sources and seismic receivers are placed on the surface of the earth. The seismic sources are triggered in a predetermined sequence, resulting in the generation of seismic waves. These seismic waves travel downward through the earth until reflected off some underground object or change in rock formation. The reflected seismic waves then travel upward and are detected at the seismic receivers on the surface. One or more clocks at the surface measure the time from generation of the seismic waves at each source to the reception of the seismic waves at each receiver. This gives an indication of the depth of the detected object underground. However, the exact speed of sound for these seismic waves is unknown, and thus, the exact depth of the detected object is also unknown. To more closely measure the exact speed of sound, a "wireline checkshot" acquired during drilling operations may be used to calibrate depth measurements by measuring the transit times between seismic sources and seismic receivers. During a "wireline checkshot," a receiver on a "wireline" is lowered a known distance into an already-drilled borehole. A surface seismic source is then triggered and the time is measured for the seismic wave to travel to the wireline receiver. Because the depth of the wireline receiver is known, an average interval velocity indicating the average speed of the seismic wave can be determined with some degree of accuracy. Wireline checkshots, however, require interruption of the drilling operations by removing the drilling string out of the hole, commonly known as tripping, and so wireline checkshot surveys often prohibitively expensive.

Another seismic acquisition technique, Vertical Seismic Profiling (VSP), is conducted between seismic sources on or near the surface of the earth, and receivers in the earth, for example in a wellbore. Measurements are acquired of the response of a seismic sensor (like a geophone) at various depths in a borehole to sources on the surface. Sometimes the surface sources are moved about the area as well. Where the source is an appreciable distance from the well head, the result is termed an offset VSP; this provides a way to seismically "look" to the side of the borehole in the vicinity around the adjacent earth formation. For an "azimuthal VSP," where the velocity field is sampled for azimuthal velocity changes relative to different lateral directions, sources are offset on the surface different directions from the borehole. In a walk-away VSP a surface source moves while the geophone in the borehole remains stationary; this provides another way to look to the side of the borehole. In a reverse VSP the source is in the borehole and geophones are on the surface. In a reverse VSP the noise generated by the drill bit during drilling operations may be used as a seismic source. VSPs are also acquired in directional and horizontal wells. A walk-above VSP is made with the sonde in a deviated hole and the source moved so as to be vertically above it.

There is a need to acquire seismic data, both checkshot transit time and VSP data during drilling operations without the expense of interrupting and halting the drilling operations. There is a need for a method and system of sending and receiving accurate high resolution checkshot and VSP seismic data in the vicinity of the drilling string generally and the drill bit particularly without the need to halt drilling operations.

The methods of the present invention overcome the foregoing disadvantages of the prior art by providing a technique for deploying a wellbore seismic receiver in a drill string without the use of a wireline and acquiring seismic data as the drill string operations are conducted within the wellbore.

### SUMMARY OF THE INVENTION

The present invention provides a method and system for acquiring seismic data while drill string operations are conducted in a wellbore. A method and system is described for acquiring seismic data while operating a drill string in a wellbore, comprising; conveying a seismic receiver proximate a lower end of the drill string or at other known locations in a drill string; generating coded seismic signals by a seismic source near a surface location; the coded signal may contain timing or instructional information; detecting the coded seismic signals with at least one sensor in the seismic receiver at at least one location of interest in the wellbore as drill string operations are conducted in a wellbore; computing the first arrival transit time or checkshot data in the seismic receiver; and storing the detected seismic signals in the seismic receiver. Additionally, the method comprises transmitting the computed arrival time to surface. The coded seismic signals may comprise timed discrete events or frequencies. A plurality of seismic receivers may be disposed along the drill string. The coded signal may be recorded at a near source sensor and stored to memory in a processing unit. Acquired data may be stored to memory in the seismic receiver and the data sent to the surface processor during drilling operations or subsequently after the drill string is removed from the wellbore. The checkshot data and VSP may be used to generate maps of subsurface features.

Further, a method and system is provided for acquiring seismic data while operating a drill string in a wellbore, comprising; synchronizing, at the surface, a surface clock in a surface controller with a downhole clock in a seismic receiver; programming, at the surface, a processor in the seismic receiver to activate during at least one predetermined time window after a predetermined delay time; conveying a seismic receiver in the drill string to a location proximate a lower end of the drill string or other known location in the drill string ; generating, under control of a surface processor, coded signals by a seismic source near a surface location; detecting the generated seismic source signals with a near-source sensor and storing said signals in the surface processor; detecting the coded seismic signals with at least one sensor in the seismic receiver at at least one location of interest in the wellbore as the drill string conducts operations in the wellbore; computing a first arrival transit time in the seismic receiver; transmitting or otherwise transferring the first arrival transit time to the surface; storing the detected seismic signals in the seismic receiver; transferring, at the surface, the detected seismic signals from the seismic receiver to the surface processor; and processing the near-source signals and the seismic receiver detected signals according to programmed instructions to generate a seismic map.

Examples of the more important features of the invention thus have been summarized rather broadly in order that the detailed description thereof that follows may be better understood, and in order that the contributions to the art may be appreciated. US-A-6400646 discloses an apparatus for acquiring seismic data while drilling a well which includes accelerometers acting as sensors. More particularly, this document states that there is at least an accelerometer in a wellbore which is the receiver. Differently, the apparatus of the present invention discloses a receiver which is controlled by an associated accelerometer that generates control signals to control the seismic data acquisition. There are, of course, additional features of the invention that will be described hereinafter and which will form the subject of the claims appended hereto.

### BRIEF DESCRIPTION OF THE DRAWINGS

For detailed understanding of the present invention, references should be made to the following detailed description of the preferred embodiment, taken in conjunction with the accompanying drawings, in which like elements have been given like numerals, wherein:
**Figure 1** is a schematic diagram of a seismic acquisition system for use in one embodiment of the present invention;
**Figure 2** is a block diagram of a seismic receiver for use in one embodiment of the present invention;
**Figure 3** is a schematic of a seismic acquisition system for use in one embodiment of the present invention;
**Figure 4** is a flow chart that illustrates the method and system of the present invention; and
**Figure 5** is a flow chart that illustrates the method and system provided by the present invention.

### DESCRIPTION OF PREFERRED EMBODIMENTS

Recognizing a single seismic event within a noisy environment, like that environment proximate to the well bore while drilling, is difficult by automatic means due to low signal to noise ratio. Surface emitted coded signals consisting of discrete timed events or frequencies are easier to recognize in the downhole conditions even given the losses and distortions due to the transit through the earth formations. Lower fundamental frequencies still retain the source generated recognizable pattern (whether the pattern is predetermined or not), allowing the downhole tool system to deduce the time of arrival of any given point on the pattern. This source generated pattern may be arbitrary or contain information about the time of source ("Source Time") activation, thus enabling transit time calculation downhole as well as enabling determination of the absolute time of "first break arrival." This "source time" may be used to synchronize the downhole and uphole (or near surface) clocks used in the acquisition system. The acquisition system thus has a self-check ability.

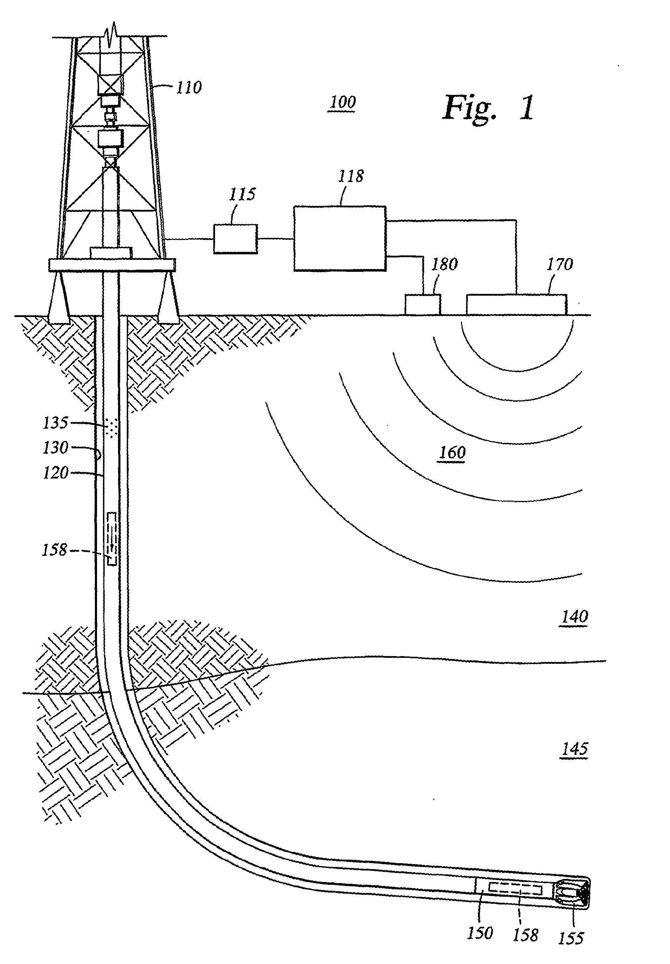

Referring to **Figure 1,** a system **100** according to the present invention includes a derrick **110** with an attached drillstring **120.** A drill bit **155** creates a well bore **130** through the surrounding formation **140,** which may also include formation boundaries corresponding to, for example, an over-pressurized zone **145.** A seismic receiver **158** with appropriate seismic sensors is inserted into the drillstring **120** and is located at a drill string receiver installation position **150,** which installation position may be near the drill bit **155** or at other positions along the drill string. The seismic receiver **158** receives seismic signals **160** from a seismic source **170.** The seismic source **170** may be an impulsive energy sequence generator or mechanical vibrator, located at the surface. The use of a particular source is exemplary only, as the system may be either land or marine-based, and is not seismic source-type specific. For example, an offshore system may include an air gun array or marine vibrator, either hung from an offshore platform or located near a service boat or anchored buoy.

The seismic source **170** contains the facility to generate and emit well-defined source patterns or specifically coded source signals. Examples of coded source signals suitable for emission from the surface to the downhole receiver during drilling operations include timed discrete event sequences and timed discrete event frequencies. Coded source signals are easier to recognize (i.e. to seismically separate the received signal from the drilling noise) in the downhole conditions while drilling even given the losses and distortions due to the transit through the earth formations and noise associated with drilling operations. Coded source signals provide suitable signals that may be processed in a downhole seismic receiver to provide seismic signal transit times (e.g., checkshot) from the surface source location to the downhole seismic receiver. Lower fundamental frequencies still retain the recognizable patterns (whether predetermined or not) allowing the downhole tool to deduce the time of arrival of any given point on the pattern. This pattern may be arbitrary or contain information about the time of source activation ("Source Time"), thus enabling transit time calculation downhole as well as absolute time of "first break arrival". This "source time" may be used to synchronize the downhole and uphole clocks used in the measurement system. This allows the system a self-check ability. The seismic source **170** thus provides a suitable quality source signal that may be used both for vertical seismic profiling and for checkshot acquisition contemporaneous with active drilling operations.

Also located at the surface is a depth indicator **115** to measure the depth positions of the drill string (or drillstring) **120** and so to ascertain the depth of components on the drill string. A depth indicator may be placed in the BHA as well, and able to transmit depth information to the surface. The depth indicator signals are transmitted to a surface controller **118** where they may be time stamped and stored in memory. The surface controller **118** is connected to the seismic source **170** for controlling the generation of seismic signals. The actual connection between the controller **118** and the seismic source **170** can be hardwired, can be radio telemetry or any other suitable communication system. Surface controller **118** contains circuitry, processing capability, and memory storage, and functions according to programmed instructions to control the generation of coded or patterned seismic signals. The surface controller circuitry contains a real-time clock for time coding the transmitted source signal. A near-field sensor **180** of any appropriate type (for receiving electromagnetic, acoustic or mechanical signals) is located near the source **170** and is used to record the acoustic signature of the source **170;** the same or an alternative sensor may be used as well to recieve any communication emitted from the downhole seismic receiver. The output of sensor **180** is transmitted to the surface controller **118** where it is time stamped and stored in memory. For example, the sensor **180** can receive and store the downhole-computed data or other information from downhole systems, for example the checkshot or source to seismic receiver transit time. The memory used for storing data in the surface processor or downhole seismic receiver may be internal random access memory, magnetic storage, optical storage, or any combination of these.

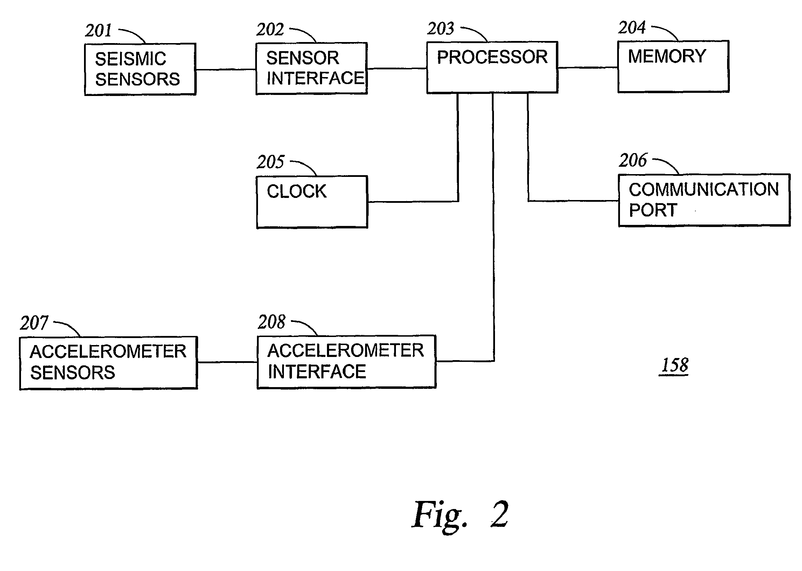

Referring to **Figure 2,** the (downhole) seismic receiver **158** may comprise a combination of sensors **201** such as hydrophones and geophones along with suitable sensor interface circuitry **202,** a processor **203,** and memory **204** for storage of programmed instructions and storage of received seismic data. A real time clock circuit **205** is also included in the receiver **158** to provide time stamps for the received seismic signals. The surface located real-time clock and the seismic receiver located real-time clock **205** are synchronized at the surface before deploying the seismic receiver **158** into the wellbore **130** or into the drill string **120.** A communications port **206** can be included to download program instructions to memory **204** and to upload stored seismic data to a surface system such as surface processor **118.** The receiver **158** is powered by batteries (not shown) or other energy source (e.g., fuel cells, downhole generator, wireline, etc.). A similar seismic receiver that is deployable by slick-line is described in US Patent 5,555,220 to Minto, assigned to the assignee of this application. While receiver system **158** is illustrated in **Figure 1** at two positions within a drill string, the location and number of deployments are flexible.

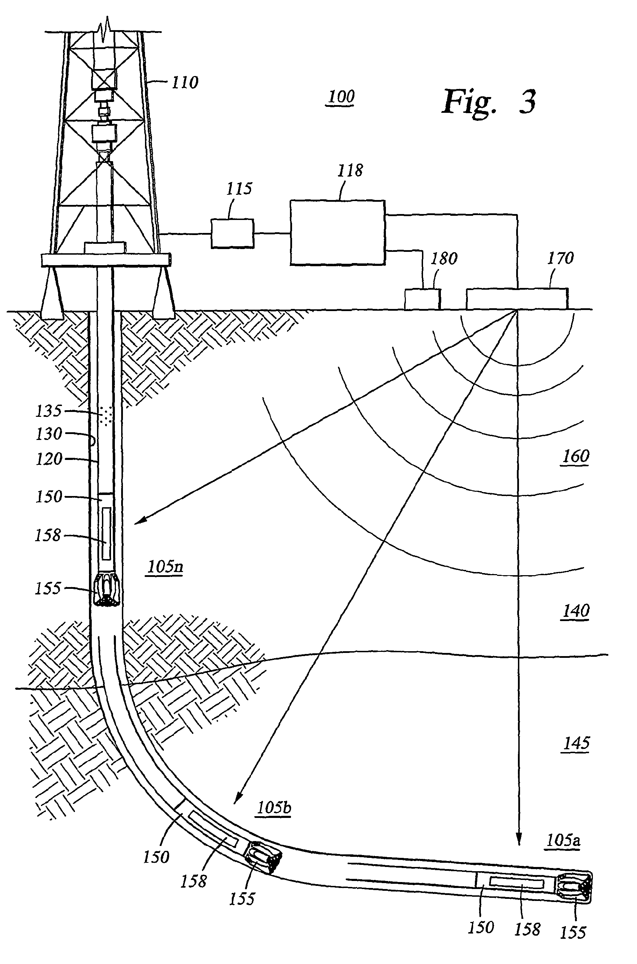

In operation, shown in **Figure 3,** the seismic receiver has been deployed in the drill string 120 and may be located at position **105a.** The seismic receiver **158** can be programmed at the surface to turn on the seismic receiving sensors **201** after a predetermined time delay. The time delay may be operator selected to allow the receiver **158** to reach a predetermined location before activating the seismic sensors **201.** Alternatively, the time delays are selected for operational convenience. Or, communication protocols known in the art for use to communicate with downhole tools may be used to activate the seismic receiver according to specific instructions from the operator. After the programmed time delay, the surface processor **118** is initiated to begin to cycle the surface source **170** generating seismic signals **160** at predetermined intervals. The interval between signals can be selected, depending on receiver depth, in order to prevent overlap of successive signals.

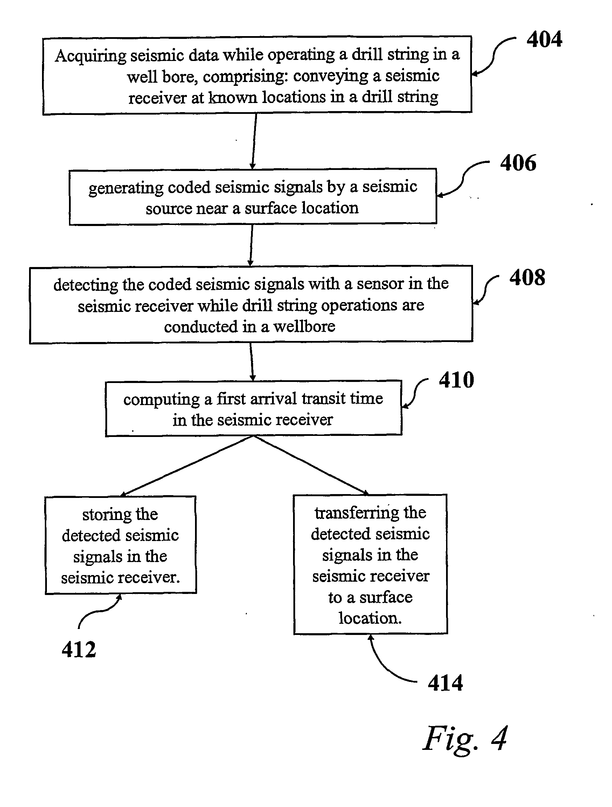

An embodiment of the method of the present invention provides for acquiring seismic data while conducting drilling operation in a wellbore is illustrated in **Figure 4:** conveying at least one seismic receiver installed at a position in a drill string **404;** generating coded signals by a seismic source near a surface location **406;** detecting the seismic signals with at least one sensor in the at least one seismic receiver at least one location in the wellbore **408;** and computing, in the seismic receiver **410,** a transit time for the detected seismic signals. Optionally, the method comprises storing the computed time **412** in the receiver **158** or transmitting the computed arrival time to surface. The coded seismic signals may comprise timed discrete events or frequencies. A plurality of seismic receivers may be disposed along the drill string. The coded signal may be recorded at a near source sensor and stored to memory in a processing unit. Acquired data may be stored to memory in the seismic receiver and the data sent to the surface processor during drilling operations or subsequently after the drill string is removed from the wellbore. The checkshot data and VSP may be used to generate maps of subsurface features.

In another embodiment provided by the present invention, the receiver **158** of **Figure 2** is programmed to take samples during predetermined time windows selected by the operator. The receiver **158** may be incorporated into the drill string system as part of a non-rotating sleeve device. The surface processor is programmed to transmit coded seismic signals **406** as illustrated in **Figure 4** during these predetermined time windows. The predetermined time windows are selected to correlate with operational activities so that the sampling time windows will occur at desired sample locations or times in the wellbore. The operator can alter operations of the drill string during these windows to provide a relatively low noise environment for the seismic sensors **201.** The receiver processor **203** samples, time stamps, and stores the detected signals during data acquisition in memory **204.** Detected signals may be processed, formed into seismic records (**410** of **Figure 4**) such as checkshot transit times or VSP data, stored into memory, and/or compressed and transmitted back to the surface sensor **180** as illustrated in **Figure 4, 412, 414.** Data acquisition may occur during normal drilling operations or the drill string may be stopped or otherwise operationally altered for data acquisition. The drill string may be stopped at predetermined locations in the wellbore **130** such as location **105b, 105n** and the drill string **120** held stationary during the time sample windows predetermined for seismic acquisition. While three locations of interest are illustrated as examples in **Figure 3,** any number of locations of interest may be chosen. The surface processor **118** cycles the source **170** activation during each sample window. The near-field sensor **180** detects each generated source signal and transmits the detected signal to the surface processor **118** where it is time stamped and stored in memory in the surface processor **118.** At the end of the drilling process, the seismic receiver 158 is retrieved from the drill string receiver installation position **150.** The time-stamped seismic signals are transmitted via the communications port **206** to the surface processor where they are processed with the near-field signals and the depth data, according to techniques known in the art, to provide data for an improved seismic map of the downhole formation.

In still another embodiment, the receiver **158** has at least one accelerometer **207** mounted in the receiver **158** to sense movement of the drill string **120,** see **Figure 2.** Signals from accelerometer **207** are conditioned by interface circuits **208** and fed to processor **203.** Accelerometer **207** may be powered continuously from the time the seismic receiver **158** is inserted into the wellbore until the receiver is returned to the surface after the seismic data acquisition process. These accelerometer signals are used to switch the seismic receiving cycle on and off in receiver **158.** When the drill string **120** is positioned at a location where it is desirable to take seismic data, such as **105a, 105b,** and **105n** in **Figure 3,** the drill string **120** may be held stationary at the surface, or drilling operations may continue uninterrupted depending on operational considerations. The accelerometer generated signals are used by the processor **203** to determine drill-string position or that the drill-string **120** has stopped moving if prior to initiating the acquisition of seismic data. The processor is preprogrammed to receive and store data for a predetermined period of time sufficient to receive coded source signals. The source **170** is activated as described above and data is taken and stored from the near-field sensor **180** and the depth sensor **115** as described previously. As before, the downhole received and stored data is transferred to the surface processor **118** when the seismic receiver **158** is returned to the surface.

In yet another preferred embodiment, an acoustic source (not shown) is coupled to the drill-string **120** at the surface. The acoustic source transmits a coded signal through the drill-string **120** that is detected and decoded by the seismic receiver **158.** The coded signal can be used to initiate the taking of data by the receiver **158.** Such acoustic systems are known in the art and are not discussed here further.

Another embodiment of the method of the present invention provides for acquiring seismic data while drilling a well, comprising: conveying at least one seismic receiver system installed in a drill string; generating coded signals by a seismic source near a surface location; detecting the seismic signals with at least one sensor in the at least one seismic receiver at least one location in the wellbore; and storing the detected seismic signals in the seismic receiver.

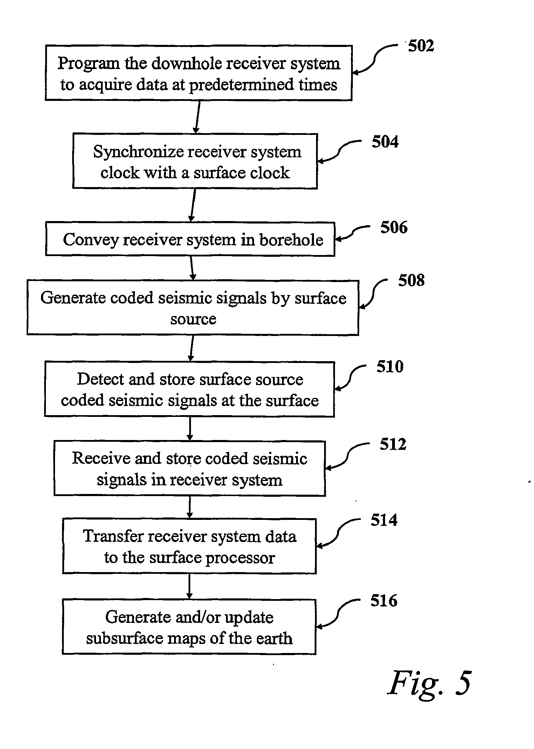

Therefore, a method of and system for acquiring seismic data during drill operations is illustrated in **Figure 5** and comprises: programming the seismic receiver system **158** of **Figure 2** at the surface **502** to enable acquisition during predetermined time intervals, to stay on and acquire data for a predetermined time, and/or to activate the acquisition process at predetermined times where the predetermined times correlate to locations of interest for taking seismic data; synchronizing a surface clock in the surface processor with a downhole clock in the seismic receiver **504;** conveying the seismic receiver system **158** at locations along the drill string **506;** generating coded seismic signals under control of the surface processor at the predetermined times correlating with the locations of interest of the seismic receiver as drilling operations are conducted in the wellbore **508;** the coded signals may contain timing information and operational instructions; detecting the generated seismic signals by a near-source sensor and storing the detected signals and drill-string depth information in the surface processor **510;** receiving and storing the generated seismic signals **512** from the surface with the seismic receiver system 158; the received signals may be correlated in real time in the downhole seismic receiver at the locations of interest as the receiver is conveyed along the wellbore and seismic data transit times through earth formations determined; transferring the seismic receiver data or determined transit times to the surface processor **514;** the data may be transferred when the receiver system **158** is removed from the wellbore, or the system **158** may otherwise affect transmission to the surface, for example through port **206;** and generating updated seismic maps of the formations surrounding the wellbore **516.**

The foregoing description is directed to embodiments of the present invention for the purpose of illustration and explanation. It will be apparent, however, to one skilled in the art that many modifications and changes to the embodiment set forth above are possible without departing from the scope of the invention which is only limited according to the wording of the following claims.

## Claims

1. A method for acquiring seismic data during drilling operations on a well, comprising;
(a) conveying at least one seismic receiver (158) installed in a drill string (120) wherein said receiver (158) is controlled by an associated accelerometer (207) that generates signals to control seismic data acquisition, the accelerometer (207) being mounted in the receiver (158);
(b) generating coded seismic signals (160) by a seismic source (170) at a surface location;
(c) detecting the coded seismic signals (160) with at least one sensor (201) in the at least one seismic receiver (158) at at least one location (105a, 105b, 105n) in the wellbore (130); and
(d) estimating an arrival time for the detected seismic signals (160) in the seismic receiver (158) using a detected code pattern.

2. The method of claim 1 wherein said estimated arrival time is transferred to a surface processor (118).

3. The method of claim 1 wherein said estimated arrival time is stored in the seismic receiver (158).

4. The method of claim 1 wherein said coded seismic signals further comprise timed discrete events.

5. The method of claim 1 wherein said coded seismic signals further comprise timed discrete frequencies.

6. The method of claim 1 further comprising a plurality of seismic receivers (158) located along the drill string (120).

7. The method of claim 1 further comprising;
(i) detecting the seismic signal with at least one sensor (180) located at the surface; and
(ii) storing the signal detected by the at least one surface sensor (180) in the surface processor (118).

8. The method of claim 1 further comprising transferring the signals stored in the seismic receiver (158) to the surface processor (118) upon removal of the drill string (120) from the wellbore (130).

9. The method of claim 1 further comprising processing, according to programmed instructions, the signals transferred to the surface processor (118) to generate a seismic map.

10. The method of Claim 1 further comprising halting rotation of the drill string (120) during seismic data acquisition.

11. The method of Claim 1 further comprising programming a processor in the seismic receiver (158) to activate during at least one predetermined time window.

12. A system for acquiring seismic data during drilling on a well, comprising;
(a) a surface seismic source (170) which generates coded seismic signals;
(b) a seismic receiver (158) installed in a drill string (120) to be conveyed in a bore hole, said seismic receiver (158) comprising a sensor (201) which detects said coded seismic signals and an associated accelerometer (207) which generates signals to control seismic data acquisition, the accelerometer (207) being mounted in the receiver (158); and
(c) said seismic sensor (201) enabled to compute an arrival time for a detected seismic signal using a detected code pattern.

13. The system of claim 12 wherein said seismic sensor (201) is enabled to transfer the computed arrival time to a surface processor (118).

14. The system of claim 12 wherein said computed arrival time is stored in the seismic receiver (158).

15. The system of claim 12 wherein said coded seismic signals further comprise timed discrete events.

16. The system of claim 12 wherein said coded seismic signals further comprise timed discrete frequencies.

17. The system of claim 12 further comprising a plurality of seismic receivers (158) located along the drill string (120).

18. The system of claim 12 further comprising at least one sensor (180) located at the surface for detecting a coded seismic signal and a processor (118) for storing the signal detected by the at least one surface sensor (180).

## Patentansprüche

1. Verfahren zum Erfassen von seismischen Daten während Bohrarbeiten an einem Bohrloch, umfassend:
(a) das Befördern von mindestens einem an einem Bohrstrang (120) befestigten seismischen Empfangsgerät (158), wobei das Empfangsgerät (158) durch einen dazugehörigen Beschleunigungsmesser (207) gesteuert wird, der Signale erzeugt, um die Erfassung von seismischen Daten zu kontrollieren, wobei der Beschleunigungsmesser (207) im Empfangsgerät (158) montiert ist;
(b) das Erzeugen von codierten seismischen Signalen (160) durch eine seismische Quelle (170) an einem Oberflächenstandort;
(c) das Erkennen der codierten seismischen Signale (160) mit mindestens einem Sensor (201) in dem mindestens einen seismischen Empfangsgerät (158) an zumindest einem Standort (105a, 105b, 105n) in der Lochbohrung (130); und
(d) das Schätzen einer Ankunftszeit für die erkannten seismischen Signale (160) im seismischen Empfangsgerät (158) unter Anwendung eines ermittelten Codemusters.

2. Verfahren nach Anspruch 1, wobei die geschätzte Ankunftszeit zu einem Oberflächenprozessor (118) übertragen wird.

3. Verfahren nach Anspruch 1, wobei die geschätzte Ankunftszeit im seismischen Empfangsgerät (158) gespeichert wird.

4. Verfahren nach Anspruch 1, wobei die codierten seismischen Signale weiters zeitlich abgestimmte diskrete Ereignisse umfassen.

5. Verfahren nach Anspruch 1, wobei die codierten seismischen Signale weiters zeitlich abgestimmte diskrete Frequenzen umfassen.

6. Verfahren nach Anspruch 1, weiters umfassend eine Mehrzahl von seismischen Empfangsgeräten (158), die entlang des Bohrstrangs (120) lokalisiert sind.

7. Verfahren nach Anspruch 1, weiters umfassend:
(i) das Erkennen des seismischen Signals mit mindestens einem an der Oberfläche lokalisierten Sensor (180); und
(ii) das Speichern des von dem mindestens einen Oberflächensensor (180) erkannten Signals im Oberflächenprozessor (118).

8. Verfahren nach Anspruch 1, weiters umfassend das Übertragen der im seismischen Empfangsgerät (158) gespeicherten Signale zum Oberflächenprozessor (118), und zwar nach Entfernung des Bohrstrangs (120) aus der Lochbohrung (130).

9. Verfahren nach Anspruch 1, weiters umfassend das Verarbeiten der zum Oberflächenprozessor (118) übertragenen Signale gemäß programmierten Instruktionen, um eine seismische Karte zu erstellen.

10. Verfahren nach Anspruch 1, weiters umfassend das Stoppen der Drehung des Bohrstrangs (120) während der Erfassung von seismischen Daten.

11. Verfahren nach Anspruch 1, weiters umfassend das Programmieren eines Prozessors im seismischen Empfangsgerät (158), so dass sich dieser während mindestens eines vorgegebenen Zeitfensters einschaltet.

12. System zum Erfassen von seismischen Daten während des Bohrens an einem Bohrloch, umfassend:
(a) eine seismische Oberflächenquelle (170), die codierte seismische Signale erzeugt;
(b) ein an einem Bohrstrang (120) befestigtes seismisches Empfangsgerät (158), das in ein Bohrloch zu transportieren ist, wobei das seismische Empfangsgerät (158) einen Sensor (201) umfasst, der die codierten seismischen Signale erkennt, sowie einen dazugehörigen Beschleunigungsmesser (207), der Signale zum Kontrollieren der Erfassung von seismischen Daten erzeugt, wobei der Beschleunigungsmesser (207) im Empfangsgerät (158) montiert ist; und
(c) den seismischen Sensor (201), der dazu aktiviert ist, eine Ankunftszeit für ein erkanntes seismisches Signal unter Anwendung eines ermittelten Codemusters zu berechnen.

13. System nach Anspruch 12, wobei der seismische Sensor (201) dazu aktiviert ist, die berechnete Ankunftszeit zu einem Oberflächenprozessor (118) zu übertragen.

14. System nach Anspruch 12, wobei die berechnete Ankunftszeit im seismischen Empfangsgerät (158) gespeichert ist.

15. System nach Anspruch 12, wobei die codierten seismischen Signale weiters zeitlich abgestimmte diskrete Ereignisse umfassen.

16. System nach Anspruch 12, wobei die codierten seismischen Signale weiters zeitlich abgestimmte diskrete Frequenzen umfassen.

17. System nach Anspruch 12, weiters umfassend eine Mehrzahl von seismischen Empfangsgeräten (158), die entlang des Bohrstrangs (120) lokalisiert sind.

18. System nach Anspruch 12, weiters umfassend mindestens einen an der Oberfläche lokalisierten Sensor (180) zum Erkennen eines codierten seismischen Signals und einen Prozessor (118) zum Speichern des durch den mindestens einen Oberflächensensor (180) erkannten Signals.

## Revendications

1. Procédé d'acquisition de données sismiques au cours d'opérations de forage sur un puits, comprenant les étapes consistant à :
(a) acheminer au moins un récepteur sismique (158) installé dans un train de tiges de forage (120), où ledit récepteur (158) est commandé par un accéléromètre associé (207) qui génère des signaux pour commander l'acquisition de données sismiques, l'accéléromètre (207) étant monté dans le récepteur (158),
(b) générer des signaux sismiques codés (160) par le biais d'une source sismique (170) à un emplacement en surface,
(c) détecter les signaux sismiques codés (160) par le biais d'au moins un capteur (201) dans le au moins un récepteur sismique (158) à au moins un emplacement (105a, 105b, 105n) dans le trou de forage de puits (130), et
(d) estimer un temps d'arrivée pour les signaux sismiques détectés (160) dans le récepteur sismique (158) en utilisant une séquence de code détectée.

2. Procédé selon la revendication 1, dans lequel ledit temps d'arrivée estimé est transféré à un processeur en surface (118).

3. Procédé selon la revendication 1, dans lequel ledit temps d'arrivée estimé est mémorisé dans le récepteur sismique (158).

4. Procédé selon la revendication 1, dans lequel lesdits signaux sismiques codés comprennent en outre des événements discrets différés.

5. Procédé selon la revendication 1, dans lequel lesdits signaux sismiques codés comprennent en outre des fréquences discrètes différées.

6. Procédé selon la revendication 1, comprenant en outre une pluralité de récepteurs sismiques (158) localisés le long du train de tiges de forage (120).

7. Procédé selon la revendication 1, comprenant en outre les étapes consistant à :
(i) détecter le signal sismique par le biais d'au moins un capteur (180) localisé au niveau de la surface, et
(ii) mémoriser le signal détecté par le au moins un capteur en surface (180) dans le processeur en surface (118).

8. Procédé selon la revendication 1, comprenant en outre le transfert des signaux mémorisés dans le récepteur sismique (158) au processeur en surface (118) lors de l'enlèvement du train de tiges de forage (120) du trou de forage de puits (130).

9. Procédé selon la revendication 1, comprenant en outre le traitement, conformément aux instructions programmées, des signaux transférés au processeur en surface (118) pour générer une carte sismique.

10. Procédé selon la revendication 1, comprenant en outre l'arrêt de la rotation du train de tiges de forage (120) au cours de l'acquisition de données sismiques.

11. Procédé selon la revendication 1, comprenant en outre la programmation d'un processeur dans le récepteur sismique (158) pour l'activer au cours d'au moins une fenêtre de temps prédéterminée.

12. Système destiné à acquérir les données sismiques au cours d'un forage sur un puits, comprenant :
(a) une source sismique en surface (170) qui génère des signaux sismiques codés,
(b) un récepteur sismique (158) installé dans un train de tiges de forage (120) pour être acheminé dans un trou de forage, ledit récepteur sismique (158) comprenant un capteur (201) qui détecte lesdits signaux sismiques codés et un accéléromètre associé (207) qui génère des signaux pour commander l'acquisition de données sismiques, l'accéléromètre (207) étant monté dans le récepteur (158), et
(c) ledit capteur sismique (201) étant activé pour calculer un temps d'arrivée d'un signal sismique détecté en utilisant une séquence de code détectée.

13. Système selon la revendication 12, dans lequel ledit capteur sismique (201) est activé pour transférer le temps d'arrivée calculé à un processeur en surface (118).

14. Système selon la revendication 12, dans lequel ledit temps d'arrivée calculé est mémorisé dans le récepteur sismique (158).

15. Système selon la revendication 12, dans lequel lesdits signaux sismiques codés comprennent en outre des événements discrets différés.

16. Système selon la revendication 12, dans lequel lesdits signaux sismiques codés comprennent en outre des fréquences discrètes différées.

17. Système selon la revendication 12, comprenant en outre une pluralité de récepteurs sismiques (158) localisés le long du train de tiges de forage (120).

18. Système selon la revendication 12, comprenant en outre au moins un capteur (180) situé à la surface destiné à détecter un signal sismique codé et un processeur (118) destiné à mémoriser le signal détecté par le au moins un capteur en surface (180).
